(19) **Europäisches Patentamt**
**European Patent Office**
**Office européen des brevets**

(11) **EP 4 769 544 A1**

(12) **EUROPEAN PATENT APPLICATION**
published in accordance with Art. 153(4) EPC

(43) Date of publication:
**01.07.2026 Bulletin 2026/27**

(21) Application number: **24877571.0**

(22) Date of filing: **11.10.2024**

(51) International Patent Classification (IPC):
$H01M\ 4/36^{(2006.01)}$    $H01M\ 4/525^{(2010.01)}$
$H01M\ 4/505^{(2010.01)}$    $H01M\ 4/131^{(2010.01)}$
$H01M\ 10/052^{(2010.01)}$    $C01G\ 53/00^{(2025.01)}$
$H01M\ 4/02^{(2006.01)}$

(52) Cooperative Patent Classification (CPC):
C01G 53/00; H01M 4/02; H01M 4/131; H01M 4/36;
H01M 4/505; H01M 4/525; H01M 10/052;
H01M 10/0525; Y02E 60/10

(86) International application number:
**PCT/KR2024/015440**

(87) International publication number:
**WO 2025/080036 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.10.2023 KR 20230136136**

(71) Applicant: **LG CHEM, LTD.**
**Yeongdeungpo-gu**
**Seoul 07336 (KR)**

(72) Inventors:
• **DO, Yoong Yeop**
**Daejeon 34122 (KR)**

• **YOU, Min Kyu**
**Daejeon 34122 (KR)**
• **LEE, June Woo**
**Daejeon 34122 (KR)**
• **LEE, Kyung Lok**
**Daejeon 34122 (KR)**
• **HA, Seoung Chul**
**Daejeon 34122 (KR)**
• **SHIN, Ji A**
**Daejeon 34122 (KR)**
• **HEO, Un Seon**
**Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL AND METHOD FOR PREPARING SAME**

(57) The present invention relates to a positive electrode active material that can be easily applied to a lithium secondary battery by suppressing a gelation phenomenon while having a high nickel content, and a method of manufacturing the same. Specifically, the present invention relates to a positive electrode active material comprising: a lithium transition metal oxide; and a coating layer positioned on the surface of the lithium transition metal oxide and including a Li-B-O solid solution, wherein the positive electrode active material has a content of residual lithium by-products of 0.3 to 1.0% by weight, a molar ratio of $LiB_2O_3$ to $LiBO_3$ in the coating layer ($LiB_2O_3/LiBO_3$) of 1.6 or more, and $B_3O_5$ in the coating layer of 19 mol% or less relative to the total ionic material, and a method of manufacturing the same.

[FIG. 1]

EP 4 769 544 A1

**Description**

**Technical Field**

CROSS-REFERENCE TO RELATED APPLICATION

This application claims the benefit of priority to Korean Patent Application No. 10-2023-0136136 filed on October 12, 2023, the disclosure of which is incorporated herein by reference in its entirety.

Technical Field

The present invention relates to a positive electrode active material and a method for manufacturing the same.

**Background Art**

As technology development and demand for mobile devices increase, demand for secondary batteries as an energy source is rapidly increasing. Among the secondary batteries, a lithium secondary battery, which has high energy density and voltage, long cycle life and low self-discharge rate, has been commercialized and is widely used.

Lithium transition metal composite oxides are used as the positive electrode active materials for the lithium secondary batteries, and among them, a lithium cobalt composite metal oxide of $LiCoO_2$, which has high operating voltage and excellent capacity characteristics, are mainly used. However, since $LiCoO_2$ has very poor thermal properties due to the instability of its crystal structure due to delithiation, and is also expensive, it has a limitation in mass use as a power source in fields such as electric vehicles.

As a material for replacing the above $LiCoO_2$, lithium manganese composite metal oxide ($LiMnO_2$ or $LiMn_2O_4$, etc.), lithium iron phosphate compound ($LiFePO_4$, etc.), or lithium nickel composite metal oxide ($LiNiO_2$, etc.), etc. have been developed. Among them, research and development on the lithium nickel composite metal oxide, which has a high reversible capacity of about 200 mAh/g and is easy to implement a large-capacity battery, is being more actively conducted. However, the $LiNiO_2$ has inferior thermal stability compared to $LiCoO_2$, and has a problem that when an internal short circuit occurs due to external pressure, etc. in a charged state, the positive electrode active material itself is decomposed, causing rupture and firing of the battery.

Accordingly, as a method for improving the low thermal stability while maintaining the excellent reversible capacity of the $LiNiO_2$, a nickel-cobalt-manganese-based lithium composite transition metal oxide in which some of Ni is replaced with Mn and Co, a nickel-cobalt-aluminum-based lithium composite transition metal oxide in which some of Ni is replaced with Mn and Al, etc. have been developed.

Lithium by-products such as LiOH and $Li_2CO_3$ that have not reacted during the manufacturing process are present on the surface of the lithium composite transition metal oxide. In order to minimize such lithium by-products, conventionally, a method of washing a calcined product obtained by calcining a positive electrode active material precursor and a lithium-containing raw material and then coating it with an inorganic oxide such as $Al_2O_3$ was used. However, in this case, there is a problem of cost burden due to the two-step process of the washing process and the coating process. In addition, since inorganic oxide powder is used, the coating uniformity is low, and thus, a thick coating layer is mainly formed only on the surface of the secondary particles. Therefore, it is difficult to implement excellent lithium ion conductivity and electrical conductivity, and side reactions with an electrolyte are likely to occur, resulting in problems of reduced capacity, output, and lifespan of the battery.

Accordingly, there is a need for a method of manufacturing a positive electrode active material that suppresses side reactions with an electrolyte and thus has excellent capacity characteristics and life characteristics by minimizing residual lithium that may remain on the surface of the positive electrode active material while enabling a uniform and thin coating on the surface of the primary particles of the positive electrode active material.

In particular, in the case of a positive electrode active material having a nickel content of 80% by weight or more, the basicity of slurry used for a positive electrode in a lithium secondary battery increases due to the influence of impurities such as LiOH and $Li_2CO_3$, which prevents the slurry from being evenly dispersed and causes the positive electrode active material and conductive material inside to clump together and gel. This gelation phenomenon of the slurry reduces the fluidity of the slurry to hinder the process of coating the slurry on the electrode, thereby drastically reducing the efficiency of the lithium secondary battery manufacturing process.

**[Prior Art Literature]**

**[Patent Documents]**

(Patent Document 1) JP WO2015-186321 A1

**Disclosure**

**Technical Problem**

An object of the present invention is to provide a positive electrode active material that can be easily applied to a lithium secondary battery by suppressing a gelation phenomenon while having a high nickel content.

**Technical Solution**

In order to achieve the above object, the present invention provides a positive electrode active material, a method for manufacturing the positive electrode active material, a positive electrode, and a lithium secondary battery.

(1) The present invention provides a positive electrode active material comprising: a lithium transition metal oxide; and a coating layer positioned on the surface of the lithium transition metal oxide and including a Li-B-O solid solution, wherein the positive electrode active material has a content of residual lithium by-products of 0.3 to 1.0% by weight, a molar ratio of $LiB_2O_3$ to $LiBO_3$ in the coating layer ($LiB_2O_3/LiBO_3$) of 1.6 or more, and $B_3O_5$ in the coating layer of 19 mol% or less relative to the total ionic material.
(2) The present invention provides the positive electrode active material according to (1) above, wherein the lithium transition metal oxide is a compound represented by Chemical Formula 1 below:

[Chemical Formula 1]           $Li_{1+x}[Ni_aCo_bMn_cM_d]O_{2-y}$

wherein:

$$-0.1 < x < 0.2,$$

$0.5 < a < 1$, $0 < b < 0.4$, $0 < c < 0.3$, $0 < d < 0.05$, $a+b+c+d=1$, $0 \leq y \leq 0.1$,
M is at least one element selected from the group consisting of Al, Mg, V, Ti, and Zr.

(3) The present invention provides the positive electrode active material according to (1) or (2) above, wherein the $LiBO_3$ in the coating layer is 3 to 10 mol% relative to the total ionic material.
(4) The present invention provides the positive electrode active material according to any one of (1) to (3) above, wherein the $LiB_2O_3$ in the coating layer is 3 to 25 mol% relative to the total ionic material.
(5) The present invention provides the positive electrode active material according to any one of (1) to (4) above, wherein the coating layer including the Li-B-O solid solution has a thickness of 5 to 10 nm.
(6) The present invention provides a method of manufacturing a positive electrode active material, the method including the steps of: 1) mixing and calcining a positive electrode active material precursor including a transition metal hydroxide and a lithium-containing raw material to produce a calcined product including a lithium transition metal oxide; 2) washing the calcined product to produce a washed product having a residual lithium amount of 0.3 to 0.9% by weight on the surface of the lithium transition metal oxide; 3) mixing the washed product and a boron-containing raw material; and 4) heat-treating the mixture in step 3) at 200 to 290°C to form a coating layer including a Li-B-O solid solution on the surface of the lithium transition metal oxide, wherein the boron-containing raw material is used in an amount of 700 to 1200 ppm by weight based on the washed product.
(7) The present invention provides the method of manufacturing a positive electrode active material according to (6) above, wherein the washing is performed by adding 30 to 150 parts by weight of a washing solution based on 100 parts by weight of the calcined product.
(8) The present invention provides the method of manufacturing a positive electrode active material according to (6) or (7) above, wherein the residual lithium is at least one selected from the group consisting of LiOH and $Li_2CO_3$.
(9) The present invention provides the method of manufacturing a positive electrode active material according to any one of (6) to (8) above, wherein the residual lithium participates as a reactant in the formation of the Li-B-O solid solution in step 4).
(10) The present invention provides a positive electrode including the positive electrode active material according to any one of (1) to (5) above.
(11) The present invention provides a lithium secondary battery including: the positive electrode according to (10) above; a negative electrode; and a separator and an electrolyte interposed between the positive electrode and the negative electrode.

**Advantageous Effects**

A lithium secondary battery with improved life characteristics and electrochemical properties can be manufactured by using the positive electrode active material of the present invention.

**Description of Drawings**

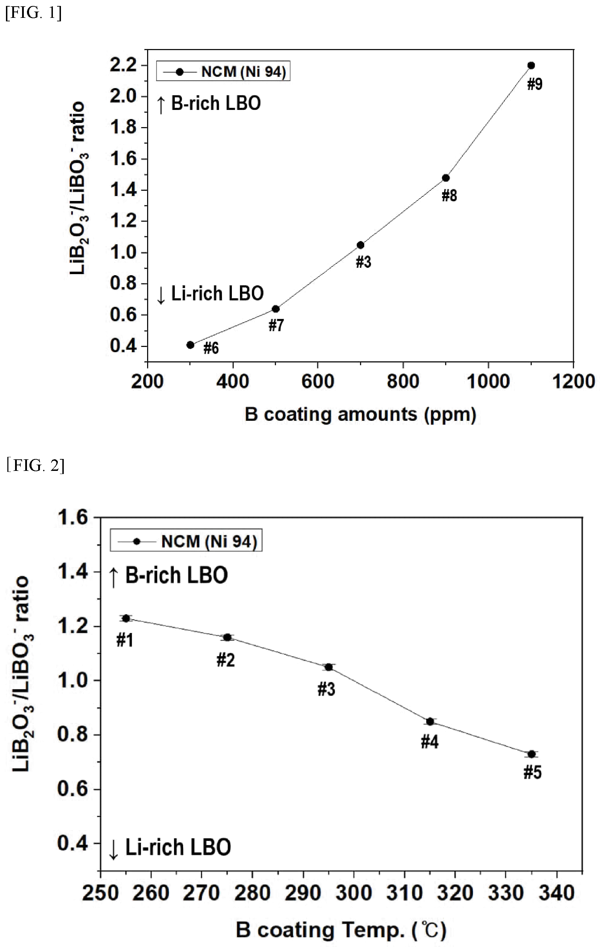

FIG. 1 shows a change in the $LiB_2O_3/LiBO_3$ molar ratio according to the boron coating content.
FIG. 2 shows a change in the $LiB_2O_3/LiBO_3$ molar ratio according to the boron coating temperature.

**Best Modes of the Invention**

Hereinafter, the present invention will be described in more detail to help understand the present invention.
The terms or words used in the description and claims of the present invention should not be construed as being limited to their ordinary or dictionary meanings, but should be interpreted as meanings and concepts consistent with the technical spirit of the present invention, based on the principle that the inventor may adequately define the concepts of terms to best describe his/her invention.
Hereinafter, the present invention will be described in detail.

**<Positive Electrode Active Material>**

A positive electrode active material of the present invention is characterized by comprising: a lithium transition metal oxide; and a coating layer positioned on the surface of the lithium transition metal oxide and including a Li-B-O solid solution, wherein the positive electrode active material has a content of residual lithium by-products of 0.3 to 1.0% by weight, a molar ratio of $LiB_2O_3$ to $LiBO_3$ in the coating layer ($LiB_2O_3/LiBO_3$) of 1.6 or more, and $B_3O_5$ in the coating layer of 19 mol% or less relative to the total ionic material.
In the present invention, the lithium transition metal oxide may be a compound represented by Chemical Formula 1 below:

[Chemical Formula 1] $\quad\quad Li_{1+x}[Ni_aCo_bMn_cM_d]O_{2-y}$

wherein:

$$-0.1 < x < 0.2,$$

$0.5 < a < 1$, $0 < b < 0.4$, $0 < c < 0.3$, $0 < d < 0.05$, $a+b+c+d=1$, $0 \leq y \leq 0.1$,
M is at least one element selected from the group consisting of Al, Mg, V, Ti, and Zr.

The 1+x refers to an atomic fraction of lithium in the lithium composite transition metal oxide, and may be $-0.1 < x < 0.2$, preferably $0 \leq x < 0.2$, and more preferably $0 \leq x \leq 0.1$.
The a refers to an atomic fraction of nickel in the lithium composite transition metal oxide, and may be $0.5 < a < 1$, preferably $0.6 \leq a < 1$, $0.7 \leq a < 1$, and more preferably $0.7 \leq a \leq 0.95$.
The b refers to an atomic fraction of cobalt in the lithium composite transition metal oxide, and may be $0 < b < 0.4$, preferably $0.1 \leq b < 0.4$, and more preferably $0.1 \leq b \leq 0.35$.
The c refers to an atomic fraction of manganese in the lithium composite transition metal oxide, and may be $0 < c < 0.3$, $0 < c \leq 0.25$, and more preferably $0.1 \leq c \leq 0.25$.
The d refers to an atomic fraction of the doping element M in the lithium composite transition metal oxide, and may be $0 < d < 0.05$, and more preferably $0.01 \leq d \leq 0.04$.
As described above, the lithium transition metal oxide of the present invention can have excellent capacity characteristics by containing nickel at a high concentration of 50% by weight or more among the total transition metals. However, despite the aforementioned advantages, conventionally, a lithium transition metal oxides with high nickel content had problems in that changes over time upon exposure to the atmosphere become severe due to thermodynamic instability, and the positive electrode slurry experiences viscosity increase and gelation phenomenon over time.

As described below, the positive electrode active material according to the present invention includes a Li-B-O coating layer in an appropriate content and components, thereby obtaining the advantages described above while suppressing problems due to changes over time and preventing gelation phenomenon, and thus improving stability and battery performance when applied to a lithium secondary battery.

In the present invention, the positive electrode active material includes a coating layer positioned on the surface of the lithium transition metal oxide and including a Li-B-O solid solution.

Specifically, the Li-B-O solid solution may include at least one selected from $LiBO_3$, $LiB_2O_3$, $LiB_2O_4$, $B_3O_5$, and $LiB_3O_6$, and the lithium ion conductivity and electrical conductivity of the coating layer including the Li-B-O solid solution are excellent, so that a lithium secondary battery having a small internal resistance can be implemented.

In the present invention, the lithium transition metal oxide included in the positive electrode active material is obtained by reacting a transition metal composite (or a high nickel-based precursor) including a transition metal such as nickel, cobalt, or manganese with a lithium compound such as $LiOH$ or $Li_2CO_3$, and may be prepared from a washed product that has been calcined (heat treated) at a high temperature and has undergone a washing process to control residual lithium on the surface.

In addition, as described below, the positive electrode active material of the present invention may be manufactured using a washed product having a residual lithium amount of 0.3 to 0.9% by weight, specifically 0.3 to 0.8% by weight, or 0.3 to 0.7% by weight on the surface of the lithium transition metal oxide.

By being manufactured through the washed product with a controlled residual lithium amount as described above, the positive electrode active material of the present invention may ultimately include the Li-B-O solid solution while having a content of residual lithium by-products of 0.3 to 1.0% by weight, 0.4 to 0.8% by weight, or 0.5 to 0.7% by weight.

In the present invention, a molar ratio of $LiB_2O_3$ to $LiBO_3$ in the coating layer ($LiB_2O_3/LiBO_3$) is 1.6 or more, and specifically, may be 1.6 to 3.0, or 1.6 to 2.6.

When $LiB_2O_3/LiBO_3$ in the coating layer satisfies the above numerical range, it means that a boron-rich Li-B-O solid solution is formed in the coating layer.

When $LiB_2O_3/LiBO_3$ is less than 1.6 outside the above range, viscosity increase and gelation phenomenon over time in the positive electrode slurry occurs when manufacturing an electrode using the positive electrode active material, which may ultimately deteriorate the physical stability of the lithium secondary battery, and may also cause problems such as reduced processability due to clogging during the slurry coating process.

In the present invention, $B_3O_5$ in the coating layer may be 19 mol% or less, and specifically 8 to 17 mol%, 12 to 16 mol%, or 15 to 16 mol%, relative to the total ionic material.

When $B_3O_5$ in the coating layer satisfies the above numerical range, it means that a Li-B-O solid solution is formed to prevent slurry gelation in the coating layer and exhibit excellent electrochemical characteristics.

When $B_3O_5$ exceeds 19 mol% outside the above range, a problem may occur in which electrochemical characteristics are seriously deteriorated when manufacturing an electrode using the positive electrode active material.

In the present invention, $LiBO_3$ in the coating layer may be 3 to 10 mol%, and specifically 5 to 8 mol%, or 6 mol%, relative to the total ionic material.

In addition, $LiB_2O_3$ in the coating layer may be 3 to 25 mol%, and specifically 5 to 18 mol%, or 10 to 15 mol%, relative to the total ionic material.

When $LiBO_3$ and $LiB_2O_3$ are within the above range, it means that a Li-B-O solid solution is formed so as to delay gelation in the coating layer.

In the present invention, the coating layer including the Li-B-O solid solution may have a thickness of 5 to 10 nm.

In the present invention, the positive electrode active material may be a secondary particle having a diameter of 12 um, or a single particle having a size of 3 to 9 um, but is not limited thereto.

### <Method of Manufacturing Positive Electrode Active Material>

A method of manufacturing a positive electrode active material of the present invention is characterized by including the steps of: 1) mixing and calcining a positive electrode active material precursor including a transition metal hydroxide and a lithium-containing raw material to produce a calcined product including a lithium transition metal oxide; 2) washing the calcined product to produce a washed product having a residual lithium amount of 0.3 to 0.9% by weight on the surface of the lithium transition metal oxide; 3) mixing the washed product and a boron-containing raw material; and 4) heat-treating the mixture in step 3) at 200 to 290°C to form a coating layer including a Li-B-O solid solution on the surface of the lithium transition metal oxide, wherein the boron-containing raw material is used in an amount of 700 to 1200 ppm by weight based on the washed product.

*Step 1)*

This is a step of mixing and calcining a positive electrode active material precursor including a transition metal hydroxide and a lithium-containing raw material to produce a calcined product including a lithium transition metal oxide.

The transition metal hydroxide may be used by purchasing a commercially available positive electrode active material precursor, or may be prepared according to a method for manufacturing a positive electrode active material precursor well known in the art. For example, the precursor may be manufactured by adding an ammonium cation-containing complex forming agent and a basic compound to a transition metal solution containing a nickelcontaining raw material, a cobalt-containing raw material, and a manganese-containing raw material, and performing a co-precipitation reaction.

The positive electrode active material precursor may include a secondary particle formed by agglomeration of primary particles, and may be represented by Chemical Formula 2 below:

[Chemical Formula 2] $\quad Ni_{a'}Co_{b'}Mn_{c'}M_{d'}(OH)_2$

wherein:

$0.5<a'<1$, $0<b'<0.4$, $0<c'<0.3$, $0<d'<0.05$, $a'+b'+c'+d'=1$,
M is at least one element selected from the group consisting of Al, Mg, V, Ti, and Zr.

The a' refers to an atomic fraction of nickel in the precursor, and may be $0.5<a'<1$, preferably $0.6\leq a'<1$, $0.7\leq a'<1$, and more preferably $0.7\leq a'\leq 0.95$.

The b' refers to an atomic fraction of cobalt in the precursor, and may be $0<b'<0.4$, preferably $0.1\leq b'<0.4$, and more preferably $0.1\leq b'\leq 0.35$.

The c' refers to an atomic fraction of manganese in the precursor, and may be $0<c'<0.3$, $0<c'\leq 0.25$, and more preferably $0.1\leq c'\leq 0.25$.

The d' refers to an atomic fraction of the doping element M in the precursor, and may be $0<d'<0.05$, and more preferably $0.01\leq d'\leq 0.04$.

The lithium-containing raw material may include at least one selected from lithium hydroxide hydrate, lithium carbonate, and lithium hydroxide. The lithium-containing raw material may be specifically lithium hydroxide hydrate, more specifically $LiOH \cdot H_2O$. In this case, the reactivity between the precursor having a high atomic fraction of nickel among the metal elements in the precursor and the lithium-containing raw material can be improved.

The positive electrode active material precursor and the lithium-containing raw material may be mixed at a molar ratio of 1:1.0 to 1:1.10, specifically 1:1.03 to 1:1.08, and more specifically 1:1.05 to 1:1.07.

When the positive electrode active material precursor and the lithium-containing raw material are mixed at the above molar ratio, the capacity of the positive electrode active material may not be reduced, the problem of unreacted Li remaining as a by-product may not occur, and the capacity decrease and the separation phenomenon of positive electrode active material particles after calcination may also be suppressed.

The calcination in step 1) may be performed at 700 to 950°C. The calcination temperature may be specifically 750 to 850°C, more specifically 750 to 800°C, or 730 to 760°C. When the calcination temperature is within the above range, the crystals may be formed in an appropriate size, and the process cost may not be high.

The calcination in step 1) may be performed in an oxygen atmosphere. In this case, a calcined product having a structurally stable phase can be formed.

The calcination in step 1) may be performed for 5 to 24 hours. The calcination may be performed specifically for 5 to 12 hours, and more specifically for 5 to 10 hours. When the calcination time is within the above range, the calcination may be performed well without deviation (uniformly) depending on the calcination position.

*Step 2)*

This is a step of washing the calcined product prepared in the above step 1) to produce a washed product having a residual lithium amount of 0.3 to 0.9% by weight on the surface of the lithium transition metal oxide.

The washing is a process for controlling the residual lithium on the surface of the lithium transition metal oxide prepared in the above step 1), and through the washing, the residual lithium amount on the surface of the lithium transition metal oxide can be controlled to 0.3 to 0.9% by weight, specifically 0.3 to 0.8% by weight, or 0.3 to 0.7% by weight.

By being manufactured through the washed product with a controlled residual lithium amount as described above, the present invention can ultimately manufacture a positive electrode active material including a coating layer that includes a Li-B-O solid solution and has the characteristics of slowing down gelation and having high lithium mobility.

Specifically, the residual lithium is used as a reactant for manufacturing the coating layer including the Li-B-O solid solution. When the residual lithium is less than 0.4% by weight, the residual lithium content on the surface capable of producing the Li-B-O solid solution is insufficient, so that lithium inside the lithium transition metal oxide core participates in the reaction for forming the Li-B-O solid solution. In this case, the collapse of the layer structure composed of the core and the coating layer is accelerated, which may cause a problem of increasing the resistance increase rate when used in a lithium secondary battery. In addition, when the residual lithium exceeds 0.9% by weight, residual lithium that has not reacted with boron exists even after the formation of the Li-B-O solid solution, which may lower the diffusivity of lithium, resulting in a decrease in capacity and an increase in resistance when used in a lithium secondary battery.

The residual lithium may be at least one selected from the group consisting of LiOH and $Li_2CO_3$, but is not limited thereto.

In the present invention, the washing may be performed by adding 30 to 150 parts by weight of a washing solution based on 100 parts by weight of the calcined product, and specifically, may be performed by adding 30 to 85 parts by weight, or 30 to 80 parts by weight, based on 100 parts by weight of the calcined product.

When the washing solution is used in the above content, the residual lithium on the surface of the lithium transition metal oxide can be controlled as intended in the present invention, the calcined product can not be gelled, and the lithium in the calcined product can be prevented from being excessively dissolved.

In addition, the washing may be performed at 10 to 80°C, and specifically, at 15 to 65°C, or at 20 to 30°C.

The washing may be performed for 1 minute to 120 minutes, and specifically, for 3 minutes to 60 minutes, or for 5 minutes to 30 minutes.

In the present invention, the solvent of the washing solution may be at least one selected from deionized water, distilled water, and ethanol. Specifically, the solvent of the washing solution may be deionized water and/or distilled water, but is not limited thereto.

After the washing and before step 3), a drying process may be further performed. The drying is for removing moisture from the lithium transition metal oxide containing moisture through the washing process, and may be performed at 60 to 150°C after the moisture is removed using a vacuum pump. Specifically, the drying may be performed under a temperature condition of 60 to 150°C for 12 hours or more.

*Step 3)*

This is a step of mixing the washed product prepared in the above step 2) with a boron-containing raw material.

The boron-containing raw material may be 700 to 1200 ppm by weight, specifically 700 to 1000 ppm by weight, or 800 to 1000 ppm by weight, based on the washed product.

When the boron-containing raw material is less than 700 ppm by weight, gelation may progress quickly, and when the boron-containing raw material is more than 1200 ppm by weight, the electrochemical characteristics of the battery may deteriorate.

As described above, if the content of the boron-containing raw material is within the above range, the coating layer including the Li-B-O solid solution is uniformly formed to have an appropriate thickness, and the life characteristics of the battery can be improved when the manufactured positive electrode active material is applied to the battery.

The boron-containing raw material may be at least one selected from $H_3BO_3$, $B_2O_3$, $B_2H_4O_4$, $LiBO_2$, $Li_2B_4O_7$, and $AlBO_3$. The boron-containing raw material may be specifically $H_3BO_3$ or $B_2O_3$, and more specifically $H_3BO_3$. In this case, since the melting point of the boron-containing raw material is low, a uniform coating layer can be formed.

*Step 4)*

This is a step of heat-treating the mixture of step 3) at 200 to 290°C to form a coating layer including a Li-B-O solid solution on the surface of the lithium transition metal oxide. The heat-treatment temperature may be 220 to 290°C, 230°C, or 290°C.

If the heat-treatment temperature is less than 200°C, electrochemical characteristics such as charge/discharge capacity may deteriorate, and if the heat-treatment temperature exceeds 290°C, a large amount of Li-rich LBO layer may be formed, so that gelation may proceed quickly and electrochemical characteristics (discharge capacity, resistance, etc.) may deteriorate.

The heat-treatment may be performed under an oxygen atmosphere, a nitrogen atmosphere, and an atmospheric atmosphere. Specifically, the heat-treatment may be performed under an oxygen atmosphere.

The heat-treatment may be performed for 5 to 24 hours. If the heat-treatment time is within the above range, an appropriate coating layer may be formed and production efficiency may be improved.

The residual lithium on the surface of the lithium transition metal oxide, the content of which is controlled in the step 2), reacts with the boron-containing raw material through heat treatment in step 4) and participates as a reactant in the formation of the Li-B-O solid solution.

**<Positive Electrode, Lithium Secondary Battery>**

A positive electrode and a lithium secondary battery including the positive electrode active material may be provided.

Specifically, the positive electrode includes a positive electrode current collector and a positive electrode active material layer formed on the positive electrode current collector and including the positive electrode active material.

In the positive electrode, the positive electrode current collector is not particularly limited as long as it has conductivity without causing a chemical change in the battery, and may be, for example, stainless steel, aluminum, nickel, titanium, calcined carbon, or aluminum or stainless steel having a surface treated with carbon, nickel, titanium, silver, etc. In addition, the positive electrode current collector may typically have a thickness of 3 $\mu$m to 500 $\mu$m, and may have fine irregularities formed on the surface of the positive electrode current collector to increase the adhesion of the positive electrode active material. For example, it may be used in various forms such as a film, a sheet, a foil, a net, a porous body, a foam, a non-woven fabric, or the like.

In addition, the positive electrode active material layer may include, along with the positive electrode active material described above, a conductive material and a binder.

Here, the conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive whisker such as zinc oxide and potassium titanate; a conductive metal oxide such as titanium oxide; or a conductive polymer such as a polyphenylene derivative, and any one or a mixture of two or more thereof may be used. The conductive material may be typically included in an amount of 1 to 30% by weight based on the total weight of the positive electrode active material layer.

In addition, the binder serves to improve the bonding between the positive electrode active material particles and the adhesion between the positive electrode active material and the positive electrode current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and any one or a mixture of two or more thereof may be used. The binder may be included in an amount of 1 to 30% by weight based on the total weight of the positive electrode active material layer.

The positive electrode may be manufactured according to a conventional positive electrode manufacturing method except for the use of the positive electrode active material described above. Specifically, it may be manufactured by applying a composition for forming a positive electrode active material layer onto a positive electrode current collector, and then drying and rolling, wherein the composition includes the above-mentioned positive electrode active material and optionally, a binder and a conductive material. The types and contents of the positive electrode active material, binder, and conductive material are as described above.

The solvent may be any solvent commonly used in the art, for example, dimethyl sulfoxide (DMSO), isopropyl alcohol, N-methyl pyrrolidone (NMP), acetone, water, or the like, and any one or a mixture of two or more thereof may be used. The solvent may be used in an amount sufficient to dissolve or disperse the positive electrode active material, conductive material, and binder in consideration of the application thickness of the slurry and the manufacturing yield, and to allow the slurry to have a viscosity capable of exhibiting excellent thickness uniformity when applied for the subsequent positive electrode production.

In addition, the positive electrode may be manufactured by casting the composition for forming the positive electrode active material layer on a separate support, peeling a film from the support, and then laminating the film on a positive electrode current collector.

The present invention may also provide an electrochemical device including the positive electrode. The electrochemical device may be specifically a battery, a capacitor, or the like, and more specifically, a lithium secondary battery.

Specifically, the lithium secondary battery includes a positive electrode, a negative electrode positioned opposite the positive electrode, and a separator and electrolyte interposed between the positive electrode and the negative electrode, wherein the positive electrode is as described above. In addition, the lithium secondary battery may optionally further include a battery container for accommodating an electrode assembly formed of the positive electrode, negative electrode, and separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. In addition, the negative electrode current collector may typically have a thickness of 3 to 500 $\mu$m, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer optionally includes a binder and a conductive material along with the negative electrode active material. For example, the negative electrode active material layer may be manufactured by applying a negative electrode-forming composition, which includes a negative electrode active material and optionally a binder and a conductive material, onto a negative electrode current collector and drying the same. Alternatively, it may also be manufactured by casting the negative electrode-forming composition on a separate support, peeling a film from the support, and then laminating the film on a negative electrode current collector.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as $SiO_\beta$ ($0<\beta<2$), $SnO_2$, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and hightemperature calcined carbon such as petroleum or coal tar pitch derived cokes.

Also, the binder and the conductive material may be the same as described in the positive electrode above.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte used in the present invention may be an organic liquid electrolyte, an inorganic liquid electrolyte, a solid polymer electrolyte, a geltype polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable. In this case, excellent electrolyte performance can be obtained by mixing the cyclic carbonate and the chain carbonate in a volume ratio of about 1:1 to about 1:9.

The lithium salt may be any compound without particular limitation as long as it can provide lithium ions used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

In order to improve the life characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexamethyl phosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

As described above, since the lithium secondary battery including the positive electrode active material according to the present invention stably exhibits excellent discharge capacity, output characteristics, and capacity retention rate, it is useful in the field of portable devices such as mobile phones, laptop computers, digital cameras, and electric vehicles such as hybrid electric vehicle (HEV).

Accordingly, the present invention may provide a battery module including the lithium secondary battery as a unit cell and a battery pack including the same.

The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

## Modes for Carrying Out the Invention

Hereinafter, the present invention will be described in more detail by way of examples. However, the following examples are intended to illustrate the present invention, and the scope of the present invention is not limited thereto.

### Preparation Example

### Preparation Example 1

Transition metal hydroxide (composition: $Ni_{0.96}Co_{0.02}Mn_{0.02}(OH)_2$) and LiOH were mixed in a ratio of 1:1.04, and then aluminum hydroxide ($Al(OH)_3$) was additionally mixed in an amount of 3 mol% based on the transition metal hydroxide so that the composition of the positive electrode active material was finally $LiNi_{0.93}Co_{0.02}Mn_{0.02}Al_{0.03}O_2$, and the mixture was calcined at a temperature of 720°C for 12 hours under an oxidizing atmosphere to prepare a calcined product. The amount of residual lithium remaining in the calcined product was 1.4% by weight.

## EXAMPLES

### Example 1

100 g of the calcined product having 1.4% by weight of residual lithium prepared in Preparation Example 1 was mixed with 40 g of distilled water and stirred for 5 minutes to prepare a washed product (composition: $LiNi_{0.93}Co_{0.02}Mn_{0.02}Al_{0.03}O_2$) having 0.7% by weight of residual lithium. The prepared washed product and 900 ppm by weight of a boron-containing raw material were mixed and heat-treated at a temperature of 255°C to manufacture a positive electrode active material having a coating layer including a Li-B-O solid solution formed on the surface.

### Example 2

100 g of the calcined product having 1.4% by weight of residual lithium prepared in Preparation Example 1 was mixed with 40 g of distilled water and stirred for 5 minutes to prepare a washed product (composition: $LiNi_{0.93}Co_{0.02}Mn_{0.02}Al_{0.03}O_2$) having 0.7% by weight of residual lithium. The prepared washed product and 900 ppm by weight of a boron-containing raw material were mixed and heat-treated at a temperature of 265°C to manufacture a positive electrode active material having a coating layer including a Li-B-O solid solution formed on the surface.

### Example 3

100 g of the calcined product having 1.4% by weight of residual lithium prepared in Preparation Example 1 was mixed with 40 g of distilled water and stirred for 5 minutes to prepare a washed product (composition: $LiNi_{0.93}Co_{0.02}Mn_{0.02}Al_{0.03}O_2$) having 0.7% by weight of residual lithium. The prepared washed product and 900 ppm by weight of a boron-containing raw material were mixed and heat-treated at a temperature of 275°C to manufacture a positive electrode active material having a coating layer including a Li-B-O solid solution formed on the surface.

**Example 4**

100 g of the calcined product having 1.4% by weight of residual lithium prepared in Preparation Example 1 was mixed with 40 g of distilled water and stirred for 5 minutes to prepare a washed product (composition: $LiNi_{0.93}Co_{0.02}Mn_{0.02}Al_{0.03}O_2$) having 0.7% by weight of residual lithium. The prepared washed product and 900 ppm by weight of a boron-containing raw material were mixed and heat-treated at a temperature of 285°C to manufacture a positive electrode active material having a coating layer including a Li-B-O solid solution formed on the surface.

**Comparative Example 1**

100 g of the calcined product having 1.4% by weight of residual lithium prepared in Preparation Example 1 was mixed with 90 g of distilled water and stirred for 5 minutes to prepare a washed product (composition: $LiNi_{0.93}Co_{0.02}Mn_{0.02}Al_{0.03}O_2$) having 0.3% by weight of residual lithium. The prepared washed product and 900 ppm by weight of a boron-containing raw material were mixed and heat-treated at a temperature of 255°C to manufacture a positive electrode active material.

**Comparative Example 2**

100 g of the calcined product having 1.4% by weight of residual lithium prepared in Preparation Example 1 was mixed with 20 g of distilled water and stirred for 5 minutes to prepare a washed product (composition: $LiNi_{0.93}Co_{0.02}Mn_{0.02}Al_{0.03}O_2$) having 1.0% by weight of residual lithium. The prepared washed product and 900 ppm by weight of a boron-containing raw material were mixed and heat-treated at a temperature of 255°C to manufacture a positive electrode active material.

**Comparative Example 3**

A positive electrode active material was manufactured in the same manner as in Example 1, except that the boron-containing raw material was mixed at 300 ppm by weight and the heat treatment was performed at a temperature of 300°C.

**Comparative Example 4**

A positive electrode active material was manufactured in the same manner as in Example 1, except that the boron-containing raw material was mixed at 500 ppm by weight and the heat treatment was performed at a temperature of 300°C.

**Comparative Example 5**

A positive electrode active material was manufactured in the same manner as in Example 1, except that the boron-containing raw material was mixed at 700 ppm by weight and the heat treatment was performed at a temperature of 300°C.

**Comparative Example 6**

A positive electrode active material was manufactured in the same manner as in Example 1, except that the boron-containing raw material was mixed at 900 ppm by weight and the heat treatment was performed at a temperature of 300°C.

**Comparative Example 7**

A positive electrode active material was manufactured in the same manner as in Example 1, except that the boron-containing raw material was mixed at 1100 ppm by weight and the heat treatment was performed at a temperature of 295°C.

**Comparative Example 8**

A positive electrode active material was manufactured in the same manner as in Example 1, except that the boron-containing raw material was mixed at 700 ppm by weight and the heat treatment was performed at a temperature of 255°C.

**Comparative Example 9**

A positive electrode active material was manufactured in the same manner as in Example 1, except that the boron-containing raw material was mixed at 700 ppm by weight and the heat treatment was performed at a temperature of 275°C.

**Comparative Example 10**

A positive electrode active material was manufactured in the same manner as in Example 1, except that the boron-containing raw material was mixed at 700 ppm by weight and the heat treatment was performed at a temperature of 295°C.

**Comparative Example 11**

A positive electrode active material was manufactured in the same manner as in Example 1, except that the boron-containing raw material was mixed at 700 ppm by weight and the heat treatment was performed at a temperature of 315°C.

**Comparative Example 12**

A positive electrode active material was manufactured in the same manner as in Example 1, except that the boron-containing raw material was mixed at 700 ppm by weight and the heat treatment was performed at a temperature of 335°C.

[Table 1]

| | Residual lithium of the washed product (wt%) | Boron content (ppm) | Heat treatment temperature (°C) |
|---|---|---|---|
| Example 1 | 0.7 | 900 | 255 |
| Example 2 | 0.7 | 900 | 265 |
| Example 3 | 0.7 | 900 | 275 |
| Example 4 | 0.7 | 900 | 285 |
| Comparative Example 1 | 0.2 | 900 | 255 |
| Comparative Example 2 | 1.0 | 900 | 255 |
| Comparative Example 3 | 0.7 | 300 | 300 |
| Comparative Example 4 | 0.7 | 500 | 300 |
| Comparative Example 5 | 0.7 | 700 | 300 |
| Comparative Example 6 | 0.7 | 900 | 300 |
| Comparative Example 7 | 0.7 | 1100 | 300 |
| Comparative Example 8 | 0.7 | 600 | 255 |
| Comparative Example 9 | 0.7 | 600 | 275 |
| Comparative Example 10 | 0.7 | 700 | 295 |
| Comparative Example 11 | 0.7 | 700 | 315 |
| Comparative Example 12 | 0.7 | 700 | 335 |

**Experimental Example 1**

5 g of each of the positive electrode active materials of the above examples and comparative examples was taken, placed in a beaker containing 100 ml of distilled water, and stirred at a speed of 300 rpm for 5 minutes to dissolve lithium remaining on the surface, and then the positive electrode active material was removed from the remaining lithium solution by using a filter with an average pore size of 0.5 μm to 5 μm.

The remaining lithium solution from which the positive electrode active material was removed was titrated with an HCl solution having a concentration of 1N to measure the amount of lithium in the solution.

The amount of lithium in the solution was measured using an automatic titrator. A first inflection point (EP1) at which pH rapidly changes at pH 7 to 9 and an end point (FP) at which pH reaches 5 were measured, and the content of $Li_2CO_3$ and the content of LiOH were calculated using the following equation.

Content of $Li_2CO_3$ (%): (FP-EP1) × 0.1 × 0.001 × (Mw of $Li_2CO_3$ (73.89)/5) × 100
Content of LiOH (%): (2×EP1-FP) × 0.1 × 0.001 × (Mw of LiOH (23.94)/5) × 100

The calculated $Li_2CO_3$ content and LiOH content were added to measure the content of lithium derivative remaining on the final surface, and the content of lithium derivative (residual lithium) remaining on the surface was converted into weight% based on the total weight of the positive electrode active material.

[Table 2]

|  | Residual lithium (wt%) |
|---|---|
| Example 1 | 0.6 |
| Example 2 | 0.6 |
| Example 3 | 0.6 |
| Example 4 | 0.6 |
| Comparative Example 1 | 0.25 |
| Comparative Example 2 | 1.2 |
| Comparative Example 3 | 0.6 |
| Comparative Example 4 | 0.6 |
| Comparative Example 5 | 0.6 |
| Comparative Example 6 | 0.6 |
| Comparative Example 7 | 0.6 |
| Comparative Example 8 | 0.6 |
| Comparative Example 9 | 0.6 |
| Comparative Example 10 | 0.6 |
| Comparative Example 11 | 0.6 |
| Comparative Example 12 | 0.6 |

As shown in Table 2 above, in Examples 1 to 4 according to the present invention, positive electrode active materials having a content of residual lithium by-products of 0.6% by weight were manufactured, and in Comparative Examples 1 and 2, positive electrode active materials having a content of residual lithium by-products of 0.3 to 1.0% by weight were manufactured.

**Experimental Example 2**

A coin-type half cell was manufactured using the positive electrode active materials of the above examples and comparative examples, and the initial characteristics and life characteristics were evaluated for each of the cells.

Specifically, each positive electrode active material, a carbon black conductive material, and a PVDF binder were mixed at a weight ratio of 97.5:1.0:1.5 in an NMP solvent to prepare a positive electrode slurry. The positive electrode slurry was applied to one surface of an aluminum current collector, dried at 130°C, and then rolled to prepare a positive electrode. Meanwhile, a Li metal disk was used as a negative electrode active material. A separator was interposed between the positive electrode and the negative electrode prepared above to manufacture an electrode assembly, which was positioned inside a battery case. Thereafter, an electrolyte was injected into the case to manufacture a coin-type half-cell. In this case, an electrolyte in which 1 M of LiPF6 was dissolved in an organic solvent of EC/EMC/DEC (3/3/4, vol%) was injected as the electrolyte to manufacture the cell.

Each of the lithium secondary batteries manufactured above was charged to 4.25 V at a constant current of 0.2 C and a cut off of 0.05 C at room temperature. Then, it was discharged to 2.5 V at a constant current of 0.2 C, and the initial discharge capacity and initial resistance were calculated.

Thereafter, charging was performed to 4.25 V at a constant current of 0.3 C and a cut off of 0.005 C at 45°C, and then discharging was performed to 2.5 V at a constant current of 0.3 C. This cycle was repeated 30 times. In this case, the resistance increase rate was calculated as a percentage of the resistance increase amount in the 30th cycle compared to the first cycle.

[Table 3]

|  | Initial discharge capacity (mAh/g) | Initial resistance (Ohm) | Resistance increase rate @30cycles (%) |
|---|---|---|---|
| Example 1 | 220.8 | 25.6 | 94.6 |
| Example 2 | 220.7 | 25.8 | 95.3 |
| Example 3 | 220.5 | 25.7 | 94.7 |
| Example 4 | 220.8 | 25.4 | 94.5 |
| Comparative Example 1 | 220.3 | 26.2 | 130.6 |
| Comparative Example 2 | 212.3 | 29.2 | 95.2 |
| Comparative Example 3 | 219.7 | 26.7 | 121.4 |
| Comparative Example 4 | 220.8 | 25.7 | 100.1 |
| Comparative Example 5 | 219.7 | 26.6 | 96.4 |
| Comparative Example 6 | 219.2 | 27.2 | 95.4 |
| Comparative Example 7 | 208.8 | 32.4 | 87.1 |
| Comparative Example 8 | 220.6 | 25.4 | 96.6 |
| Comparative Example 9 | 220.0 | 25.7 | 97.1 |
| Comparative Example 10 | 219.8 | 26.2 | 96.5 |
| Comparative Example 11 | 219.0 | 26.5 | 94.8 |
| Comparative Example 12 | 215.6 | 25.8 | 95.3 |

As shown in Table 3 above, it can be confirmed that the characteristics of the secondary battery are improved in the batteries using the positive active materials of the examples.

On the other hand, it can be seen that in Comparative Example 1, the residual lithium is too low, so that the resistance increase rate is large, and in Comparative Example 2, the residual lithium is excessive, so that the capacity is small and the resistance is large. In addition, in the case of Comparative Examples 3 to 12, it can be confirmed that there is a problem in that the initial discharge capacity is low, the initial resistance is high, or the resistance increase rate is low.

**Experimental Example 3**

The LBO layer was analyzed using ToF-SIMS and XPS, and the molar ratio of $LiB_2O_3$ to $LiBO_3$ in the coating layer ($LiB_2O_3/LiBO_3$) and the content of $B_3O_5$ relative to the total ionic material were calculated.

ToF-SIMS5 of IonTOF (Germany) was used as the ToF-SIMS equipment, and the analysis was performed under the following conditions:

Negative mode:

1) Primary Ion: Bi3+ 30keV
2) X-ray spot size: 400 $\mu$m
3) raster size 500 $\mu$m$\times$500 $\mu$m
4) cycle time: 100 $\mu$s
5) Scan: 10 times

[Table 4]

|  | $LiB_2O_3/LiBO_3$ | $B_3O_5$ content (mol%) |
|---|---|---|
| Example 1 | 2.54±0.01 | 15.5 |
| Example 2 | 2.25±0.01 | 15.1 |
| Example 3 | 1.89±0.01 | 15.4 |
| Example 4 | 1.68±0.01 | 15.1 |
| Comparative Example 3 | 0.41±0.01 | 3.5±0.1 |
| Comparative Example 4 | 0.64±0.01 | 5.5±0.1 |
| Comparative Example 5 | 1.05±0.01 | 12.6±0.1 |
| Comparative Example 6 | 1.48±0.02 | 15.3±0.1 |
| Comparative Example 7 | 2.20±0.01 | 21.0±0.1 |
| Comparative Example 8 | 1.23±0.01 | 10.7±0.1 |
| Comparative Example 9 | 1.16±0.01 | 10.9±0.1 |
| Comparative Example 10 | 1.05±0.01 | 12.3±0.1 |
| Comparative Example 11 | 0.85±0.01 | 12.1±0.1 |
| Comparative Example 12 | 0.73±0.01 | 11.9±0.1 |

As shown in Table 4 above, in Comparative Examples 3 to 7 and 10 to 12 in which the heat treatment temperature was too high, and Comparative Examples 8 and 9 in which the amount of boron-containing raw material used was too low, positive electrode active materials not satisfying the $LiB_2O_3/LiBO_3$ and $B_3O_5$ content defined in the present invention were manufactured.

**Experimental Example 4**

For the prepared positive electrode slurry, the viscosity was measured at 25°C, SC4-25, 26z, and 16 rpm using a Brookfield viscometer. Since 30,000 cp was the measurement limit under these measurement conditions, it was set as the measurement stop point.

[Table 5]

|  | Example 1 | Comparative Example 3 | Comparative Example 5 | Comparative Example 6 | Comparative Example 8 | Comparative Example 12 |
|---|---|---|---|---|---|---|
| $LiB_2O_3/LiBO_3$ | 2.32±0.01 | 0.41±0.01 | 1.05±0.01 | 1.48±0.02 | 1.23±0.01 | 0.73±0.01 |
| Viscosity@ 0day | 5955 | 5595 | 5490 | 5580 | 6520 | 5150 |
| Viscosity@ 1day | 6690 | >30000 | 6285 | 9420 | 8235 | 21915 |
| Viscosity@ 2day | 7845 |  | 17145 | 13635 | 17850 | >30000 |
| Viscosity@ 3day | 8140 |  | >30000 | 16920 | 26685 |  |
| Viscosity@ 4day | 9015 |  |  | 21225 | >30000 |  |
| Viscosity@ 5day | 10905 |  |  | >30000 |  |  |
| Viscosity@ 7day | 13740 |  |  |  |  |  |

As shown in Table 5 above, in the case of Example 1 in which the $LiB_2O_3/LiBO_3$ value was as high as 1.6 or more, it was confirmed that the increase in slurry viscosity was alleviated compared to the comparative examples.

In conclusion, it can be seen that the positive electrode active material according to the present invention has a high nickel content while suppressing the gelation phenomenon, and thus, can be easily applied to a lithium secondary battery, and can also improve the life characteristics and electrochemical properties of the lithium secondary battery.

**Claims**

1.  A positive electrode active material comprising:

    a lithium transition metal oxide; and
    a coating layer positioned on the surface of the lithium transition metal oxide and including a Li-B-O solid solution,
    wherein the positive electrode active material has a content of residual lithium by-products of 0.3 to 1.0% by weight,
    a molar ratio of $LiB_2O_3$ to $LiBO_3$ in the coating layer ($LiB_2O_3/LiBO_3$) of 1.6 or more, and
    $B_3O_5$ in the coating layer of 19 mol% or less relative to the total ionic material.

2.  The positive electrode active material according to claim 1, wherein the lithium transition metal oxide is represented by Chemical Formula 1 below:

    [Chemical Formula 1]       $Li_{1+x}[Ni_aCo_bMn_cM_d]O_{2-y}$

    wherein:

    $$-0.1 < x < 0.2,$$

    $0.5 < a < 1$, $0 < b < 0.4$, $0 < c < 0.3$, $0 < d < 0.05$, $a+b+c+d=1$, $0 \leq y \leq 0.1$,
    M is at least one element selected from the group consisting of Al, Mg, V, Ti, and Zr.

3.  The positive electrode active material according to claim 1, wherein the $LiBO_3$ in the coating layer is 3 to 10 mol% relative to the total ionic material.

4.  The positive electrode active material according to claim 1, wherein the $LiB_2O_3$ in the coating layer is 3 to 25 mol% relative to the total ionic material.

5.  The positive electrode active material according to claim 1, wherein the coating layer including the Li-B-O solid solution has a thickness of 5 to 10 nm.

6.  A method of manufacturing a positive electrode active material, the method including the steps of:

    1) mixing and calcining a positive electrode active material precursor including a transition metal hydroxide and a lithium-containing raw material to produce a calcined product including a lithium transition metal oxide;
    2) washing the calcined product to produce a washed product having a residual lithium amount of 0.3 to 0.9% by weight on the surface of the lithium transition metal oxide;
    3) preparing a mixture by mixing the washed product and a boron-containing raw material; and
    4) heat-treating the mixture in step 3) at 200 to 290°C to form a coating layer including a Li-B-O solid solution on the surface of the lithium transition metal oxide,

    wherein the boron-containing raw material is used in an amount of 700 to 1200 ppm by weight based on the washed product.

7.  The method of manufacturing a positive electrode active material according to claim 6, wherein the washing is performed by adding 30 to 150 parts by weight of a washing solution based on 100 parts by weight of the calcined product.

8.  The method of manufacturing a positive electrode active material according to claim 6, wherein the residual lithium is at least one selected from the group consisting of LiOH and $Li_2CO_3$.

9. The method of manufacturing a positive electrode active material according to claim 6, wherein the residual lithium participates as a reactant in the formation of the Li-B-O solid solution in step 4).

10. A positive electrode comprising the positive electrode active material according to any one of claims 1 to 5.

11. A lithium secondary battery comprising: the positive electrode of claim 10; a negative electrode; and a separator and an electrolyte interposed between the positive electrode and the negative electrode.

[FIG. 1]

[FIG. 2]

## INTERNATIONAL SEARCH REPORT

| International application No. |
| --- |
| **PCT/KR2024/015440** |

| A. | CLASSIFICATION OF SUBJECT MATTER |
| --- | --- |

**H01M 4/36**(2006.01)i; **H01M 4/525**(2010.01)i; **H01M 4/505**(2010.01)i; **H01M 4/131**(2010.01)i; **H01M 10/052**(2010.01)i; **C01G 53/00**(2006.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); H01M 10/052(2010.01); H01M 10/0565(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전이금속(transition metal), 산화물(oxide), 고용체(solid solution), 붕소 (boron), 양극(cathode), 활물질(active material), 이차전지(secondary battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2023-0084077 A (LG CHEM, LTD.) 12 June 2023 (2023-06-12)<br>See claims 1 and 8, and paragraphs [0059]-[0061], [0086], [0089], [0093], [0095], [0103], [0121] and [0122]. | 1-11 |
| Y | KR 10-2021-0038075 A (LG CHEM, LTD.) 07 April 2021 (2021-04-07)<br>See claims 10 and 14, and paragraphs [0016], [0019], [0025], [0026] and [0058]. | 1-11 |
| A | KR 10-2021-0154748 A (ECOPRO BM CO., LTD.) 21 December 2021 (2021-12-21)<br>See claims 1-3, 8, 11 and 12. | 1-11 |
| A | KR 10-2020-0113122 A (LG CHEM, LTD. et al.) 06 October 2020 (2020-10-06)<br>See claims 1, 4 and 8. | 1-11 |
| A | KR 10-2022-0057843 A (LG CHEM, LTD.) 09 May 2022 (2022-05-09)<br>See claims 1, 8, 9, 11 and 13. | 1-11 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 January 2025** | **14 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/015440**

| Patent document cited in search report | | | Publication date (day/month/year) | Patent family member(s) | | | Publication date (day/month/year) |
|---|---|---|---|---|---|---|---|
| KR | 10-2023-0084077 | A | 12 June 2023 | CA | 3238308 | A1 | 08 June 2023 |
| | | | | CN | 118235269 | A | 21 June 2024 |
| | | | | EP | 4421906 | A1 | 28 August 2024 |
| | | | | JP | 2024-540563 | A | 31 October 2024 |
| | | | | WO | 2023-101512 | A1 | 08 June 2023 |
| KR | 10-2021-0038075 | A | 07 April 2021 | None | | | |
| KR | 10-2021-0154748 | A | 21 December 2021 | CN | 115699362 | A | 03 February 2023 |
| | | | | CN | 115699363 | A | 03 February 2023 |
| | | | | EP | 4148825 | A1 | 15 March 2023 |
| | | | | EP | 4148826 | A1 | 15 March 2023 |
| | | | | JP | 2023-529487 | A | 10 July 2023 |
| | | | | JP | 2023-529489 | A | 10 July 2023 |
| | | | | JP | 2024-053017 | A | 12 April 2024 |
| | | | | JP | 2024-053018 | A | 12 April 2024 |
| | | | | JP | 2024-144487 | A | 11 October 2024 |
| | | | | JP | 7507257 | B2 | 27 June 2024 |
| | | | | JP | 7531626 | B2 | 09 August 2024 |
| | | | | KR | 10-2021-0154758 | A | 21 December 2021 |
| | | | | KR | 10-2024-0119040 | A | 06 August 2024 |
| | | | | KR | 10-2024-0171060 | A | 06 December 2024 |
| | | | | KR | 10-2689944 | B1 | 30 July 2024 |
| | | | | KR | 10-2738643 | B1 | 05 December 2024 |
| | | | | US | 2023-0111400 | A1 | 13 April 2023 |
| | | | | US | 2023-0121699 | A1 | 20 April 2023 |
| | | | | WO | 2021-251786 | A1 | 16 December 2021 |
| | | | | WO | 2021-251793 | A1 | 16 December 2021 |
| KR | 10-2020-0113122 | A | 06 October 2020 | CN | 114072934 | A | 18 February 2022 |
| | | | | CN | 114072934 | B | 13 August 2024 |
| | | | | EP | 3896761 | A1 | 20 October 2021 |
| | | | | JP | 2022-518416 | A | 15 March 2022 |
| | | | | JP | 7297191 | B2 | 26 June 2023 |
| | | | | US | 11575116 | B2 | 07 February 2023 |
| | | | | US | 2020-0303720 | A1 | 24 September 2020 |
| | | | | WO | 2020-197197 | A1 | 01 October 2020 |
| KR | 10-2022-0057843 | A | 09 May 2022 | CN | 116057014 | A | 02 May 2023 |
| | | | | EP | 4174026 | A1 | 03 May 2023 |
| | | | | JP | 2023-538577 | A | 08 September 2023 |
| | | | | KR | 10-2622332 | B1 | 09 January 2024 |
| | | | | US | 2023-0278887 | A1 | 07 September 2023 |
| | | | | WO | 2022-092906 | A1 | 05 May 2022 |

Form PCT/ISA/210 (patent family annex) (July 2022)

REFERENCES CITED IN THE DESCRIPTION

**Patent documents cited in the description**

- KR 1020230136136
- WO 2015186321 A1